## Europäisches Patentamt

## European Patent Office

## Office européen des brevets

(19)

(11) Veröffentlichungsnummer: **0 014 486**
**B1**

(12) **EUROPÄISCHE PATENTSCHRIFT**

(45) Veröffentlichungstag der Patentschrift:
**10.11.82**

(51) Int. Cl.³: **B 60 T 15/04** // B61H13/00

(21) Anmeldenummer: **80200023.2**

(22) Anmeldetag: **10.01.80**

(54) **Druckregler an einem Führerbremsventil einer indirekt wirkenden Druckluftbremse.**

(30) Priorität: **31.01.79 CH 913/79**

(43) Veröffentlichungstag der Anmeldung:
**20.08.80 Patentblatt 80/17**

(45) Bekanntmachung des Hinweises auf die Patenterteilung:
**10.11.82 Patentblatt 82/45**

(84) Benannte Vertragsstaaten:
**AT BE CH DE FR GB IT NL SE**

(56) Entgegenhaltungen:
**DE-B-1 146 520**
**DE-B-1 155 470**

(73) Patentinhaber: **Werkzeugmaschinenfabrik Oerlikon-Bührle AG, Birchstrasse 155, CH-8050 Zürich (CH)**

(72) Erfinder: **Srbinovic, Slobodan, Kunklerstrasse 20, CH-8600 Dübendorf (CH)**
Erfinder: **Thöny, Riet, Nürenbergstrasse 23, CH-8037 Zürich (CH)**

Druckregler an einem Führerbremsventil einer indirekt wirkenden Druckluftbremse

Die Erfindung betrifft einen Druckregler an einem Führerbremsventil einer indirekt wirkenden Druckluftbremse, mit einem an eine Speiseleitung angeschlossenen Druckregelventil, das von einem Kolben betätigbar ist, der zwei Kammern begrenzt, und der einerseits vom Regeldruck beaufschlagbar und anderseits von einer einstellbaren Regelfeder belastet ist, die von einem Führerbremshebel betätigbar ist.

Es sind Druckregler dieser Art bekannt (CH-A-344 749 oder DE-B-1 155 470), bei denen der Kolben einerseits vom Regeldruck und anderseits vom Atmosphärendruck und von einer einstellbaren Regelfeder belastet ist.

Diese Ausbildung des Druckreglers hat den Nachteil, dass verhältnismässig grosse und starke Regelfedern erforderlich sind, z.B. für einen Regeldruck von 5 bar sind Federkräfte von ca. 50 kg erforderlich.

Die Aufgabe der vorliegenden Erfindung besteht nun darin, den Druckregler so auszubilden, dass wesentlich kleinere Regelfedern verwendet werden können.

Der erfindungsgemässe Druckregler ist dadurch gekennzeichnet, dass in der anderen Kammer zusätzlich zur Regelfeder eine zweite Feder angeordnet ist, die einerseits ebenfalls am Kolben anliegt und anderseits in der Kammer ortsfest abgestützt ist.

Eine prioritätsältere Anmeldung (EP-0 001 135) der Anmelderin löst die gleiche Aufgabe dadurch, dass der Kolben als Differentialkolben ausgebildet ist, und dass auf den kleineren Kolben ausser der Regelfederkraft ein konstanter Luftdruck einwirkt. Diese Lösung ist aber mit Abdichtschwierigkeiten bei den Verbindungselementen zum Führerbremshebel verbunden.

Weiter ist vorgeschlagen worden, eine auf den Kolben einwirkende reduzierte Regelfederkraft durch einen konstanten Druck zu unterstützen, z.B. mit einem Druckuntersetzer zwischen der Speiseleitung und der Regelfederkammer. Aber auch diese Lösung ist mit Abdichtschwierigkeiten verbunden.

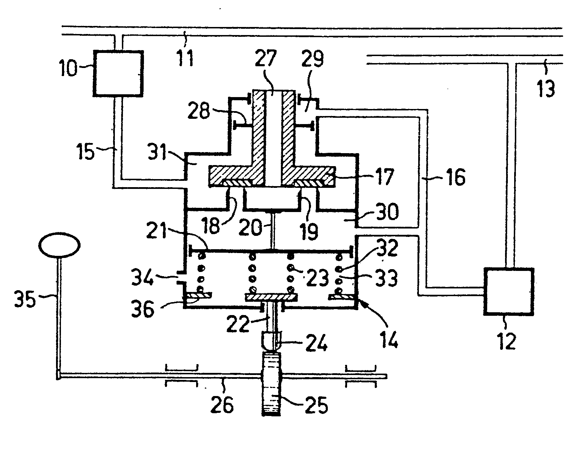

Ein Ausführungsbeispiel des erfindungsgemässen Druckreglers ist anhand der beigefügten Zeichnung, einer schematischen Darstellung des Druckreglers, im folgenden ausführlich beschrieben.

Gemäss der Zeichnung ist ein Druckbegrenzer 10 an eine Speiseleitung 11 und ein Hauptsteuerorgan 12 an eine Hauptluftleitung 13 angeschlossen. Ein Druckregler 14 ist einerseits über eine Zweigleitung 15 an den Druckbegrenzer 10 und anderseits über eine andere Zweigleitung 16 an das Hauptsteuerorgan 12 angeschlossen. Der Druckregler 14 weist ein Druckregelventil auf, das durch einen Ventilteller 17 gebildet wird, der einerseits mit einem ortsfesten Ventilsitz 18 und anderseits mit einem beweglichen Ventilsitz 19 zusammenwirkt. Der bewegliche Ventilsitz 19 befindet sich am Ende einer Kolbenstange 20, die an einem Kolben 21 befestigt ist. Eine Regelfeder 23 stützt sich einerseits am Kolben 21 und anderseits an einem Stössel 22 ab. Dieser Stössel 22 wird durch die Regelfeder 23, einstellbar durch den am Stössel 22 verschiebbar befestigten Kopf 24, gegen eine Nockenscheibe 25 gedrückt, welche auf einer drehbar gelagerten Welle 26 befestigt ist. Ein Führerbremshebel 35 ist an der Welle 26 befestigt und dient zur Betätigung des beschriebenen Druckreglers 14. Der Ventilteller 17 weist eine Entlüftungsbohrung 27 auf und ist an einem Kolben 28 befestigt. Eine obere durch diesen Kolben 28 begrenzte Kammer 29 sowie eine erste zwischen Ventilteller 17 und dem Kolben 21 befindliche Kammer 30 sind über die Zweigleitung 16 mit dem Hauptsteuerorgan 12 verbunden. Eine zweite zwischen dem oberen Kolben 28 und dem Ventilteller 17 befindliche Kammer 31 ist über die Zweigleitung 15 mit dem Druckbegrenzer 10 verbunden. Eine unterhalb des Kolbens 21 angeordnete untere Kammer 33 ist über eine Öffnung 34 mit der Atmosphäre verbunden. Schliesslich befindet sich erfindungsgemäss in der unteren Kammer 33 eine zweite Feder 32, angeordnet zwischen dem Kolben 21 und einem Gehäusering 36, welcher vorzugsweise einstellbar ausgebildet ist. Da die Regelfeder 23 und die zweite Feder 32 gemeinsam auf den Kolben wirken, kann jede dieser Federn kleiner dimensioniert werden.

Die Wirkungsweise des beschriebenen Druckreglers ist wie folgt. Der Druckbegrenzer 10 sorgt dafür, dass die von der Speiseleitung 11 entnommene Druckluft immer einen möglichst konstanten Wert, z.B. 5 bar, aufweist, d.h. in der zweiten Kammer 31 herrscht somit ständig ein konstanter Druck.

Bei vollständig gelöster Bremse herrscht auch in der Hauptluftleitung 13 der maximal zulässige Druck von 5 bar. Damit dieser Druck erreicht wird, muss das Hauptsteuerorgan 12 diesen Druck in die Hauptluftleitung 13 einsteuern können. Es muss daher auch in der Zweigleitung 16, in der oberen Kammer 29 sowie in der ersten Kammer 30 oberhalb des Kolbens 21 dieser Druck von 5 bar herrschen. Damit bei diesen Druckverhältnissen keine Druckluft aus der ersten Kammer 30 durch die Bohrung 27 des Ventiltellers 17 in die Atmosphäre entweichen kann, muss zur Unterstützung der zweiten Feder 32 die Regelfeder 23 entsprechend stark vorgespannt werden. Diese Vorspannung wird dadurch erreicht, dass die Nockenscheibe 25 mit Hilfe des Führerbremshebels 35 in die Lösestellung geschwenkt wird.

Zum Bremsen muss der Druck in der Hauptluftleitung 13 gesenkt werden. Entsprechend der gewünschten Bremsstufe wird der Führerbremshebel 35 geschwenkt und dadurch die Regelfeder 23 entspannt. Somit wird die auf den Kolben 21 wirkende Kraft verkleinert, wodurch sich der Kolben 21 senkt. Aus der Kammer 30 kann Luft durch die Bohrung 27 in die Atmosphäre entweichen. Der Druck in der Kammer 30 wird daher so weit absinken, bis die von oben und unten auf den Kolben 21 wirkenden Kräfte wieder im Gleichgewicht sind. Entsprechend wird auch der Druck in der Hauptluftleitung 13 absinken.

Zum Lösen der Bremse muss der Druck in der Hauptluftleitung 13 erhöht werden. Entsprechend der gewünschten Lösestufe wird der Führerbremshebel 35 geschwenkt und dadurch die Regelfeder 23 gespannt. Somit wird die auf den Kolben 21 wirkenden Kraft vergrössert, wodurch sich der Kolben 21 hebt. Der Ventilteller 17 wird von seinem Sitz 18 abgehoben, und Druckluft strömt aus der zweiten Kammer 31 in die erste Kammer 30. Der Druck in der Kammer 30 wird daher ansteigen, bis die von oben und unten auf den Kolben 21 wirkenden Kräfte wieder im Gleichgewicht sind. Entsprechend wird auch der Druck in der Hauptluftleitung 13 ansteigen.

Durch fachmännische konstruktive Umbildung können anstelle der beiden Druckfedern 23 und 32 gemäss dem Ausführungsbeispiel wahlweise Zugfedern verwendet werden.

## Patentansprüche

1. Druckregler an einem Führerbremsventil einer indirekt wirkenden Druckluftbremse, mit einem an eine Speiseleitung (11) angeschlossenen Druckregelventil (17, 18, 19), das von einem Kolben (21) betätigbar ist, der zwei Kammern (30, 33) begrenzt und der einerseits vom Regeldruck beaufschlagbar und anderseits von einer einstellbaren Regelfeder (23) belastet ist, die von einem Führerbremshebel (35) betätigbar ist, dadurch gekennzeichnet, dass in der andern Kammer (33) zusätzlich zur Regelfeder (23) eine zweite Feder (32) angeordnet ist, die einerseits ebenfalls am Kolben (21) anliegt und anderseits in der Kammer (33) ortsfest abgestützt ist.

2. Druckregler nach Anspruch 1, dadurch gekennzeichnet, dass die ortsfeste Abstützung (36) der zweiten Feder (32) einstellbar ausgebildet ist.

3. Druckregler nach Anspruch 1 oder 2, dadurch gekennzeichnet, dass wahlweise die Regelfeder (23) und die zweite Feder (32) als Druck- oder Zugfeder ausgebildet sind.

## Claims

1. A pressure controller for a driver's brake valve of an indirectly-acting compressed air brake comprising a pressure control valve (17, 18, 19) which is connected to a compressed air supply line (11) and which is actuated by a piston (21), limiting two chambers (30, 33), the piston (21) being subjected on one side to control pressure and on the other side to the force exerted by an adjustable control spring (23) which is actuated by a driver's brake lever (35) characterised by a second spring (32) in the other chamber (33) in addition to the control spring (23), the second spring (32) on one side also rests against the piston (21) and on the other side is stationary supported in the chamber (33).

2. A pressure controller according to claim 1, characterised in that the stationary support (36) of the second spring (32) is adjustable constructed.

3. A pressure controller according to claim 1 or 2, characterised in that the control spring (23) and the second spring (32) are selectively determined as a compression- or an extension spring.

## Revendications

1. Régulateur de pression pour une vanne de frein de mécanicien pour un frein à air comprimé à action indirecte, avec une vanne de réglage de pression (17, 18, 19) reliée à une conduite d'alimentation (11), et qui est susceptible d'être actionnée par un piston (21) qui délimite deux chambres (30, 33) et qui peut être soumis à l'action d'une part de la pression de réglage et d'autre part d'un ressort de réglage (23) réglable, qui peut être actionné par le levier de frein du mécanicien (35), caractérisé en ce que dans l'autre chambre (33) en plus du ressort de réglage (23), il est prévu un second ressort (32) qui s'appuie d'une part également sur le piston (21) et d'autre part de façon fixe dans la chambre (33).

2. Régulateur de pression selon la revendication 1, caractérisé en ce que l'appui fixe (36) du second ressort (32) est réalisé réglable.

3. Régulateur de pression selon la revendication 1 ou 2, caractérisé en ce qu'au choix le ressort de réglage (23) et le second ressort (32) sont des ressorts de compression ou de traction.